# EUROPEAN PATENT SPECIFICATION

(11) **EP 0 566 227 B1**
(45) Date of publication and mention of the grant of the patent: **12.11.1997**
(21) Application number: 93300424.4
(22) Date of filing: 21.01.1993
(51) Int. Cl.: B25F 5/00, F16K 11/074

(54) **Push button reverse valve for power tool**
Druckknopfrückwärtsventil für kraftbetriebenes Gerät
Valve d'inversion de bouton-poussoir pour appareil à moteur

(30) Priority: 13.04.1992 US 867548
(43) Date of publication of application: 20.10.1993
(73) Proprietor: INGERSOLL-RAND COMPANY, Woodcliff Lake New Jersey 07675-8738 (US)
(72) Inventor: Geiger, Robert E., Sayre, Pennsylvania 18840 (US)
(74) Representative: Feakins, Graham Allan

(56) References cited:
- US-A- 1 605 436
- US-A- 3 833 068
- US-A- 3 909 867
- US-A- 3 951 217
- US-A- 4 716 934

## Description

This invention relates generally to reversing valves for power tools and more particularly to a reversing valve for a pneumatically operated hand held power tool.

In the past, reversing valves for power tools have been complicated in structure or difficult or inconvenient to operate.

US-A-3 833 068 discloses a reverse valve for a pneumatic pressure operated tool in accordance with the pre-characterising portion of claim 1.

US-A-3 951 217 discloses a pneumatically powered impact wrench with a conventional push button to actuate the wrench.

According to the present invention, there is provided a reverse valve for a pneumatic pressure operated power tool comprising a rotatable spool disposed in a circular passageway; a means for engaging and rotating said spool; said spool being further provided with a means for receiving air at one end thereof and selectively distributing it to one of a plurality of passages of the valve; said selected distribution being in response to selected rotation of said spool; characterised in that said passages facing the other end of said spool, through which end air is distributed, and in that said means for engaging and rotating said spool comprises a plurality of side-by-side positioned push buttons.

For a better understanding of the invention and to show how the same may be carried into effect, reference will now be made, by way of example, to the accompanying drawings, in which:-
Figure 1 is a partially sectioned elevation of a push button reverse valve installed in a pneumatic operated power tool;
Figure 2 is an end elevation showing the push buttons' convenient location;
Figure 3 is a cross-sectional view taken at line 3-3 of Figure 1 showing push button actuators;
Figure 4 is a view of a distributor face plate of the valve;
Figure 5 is an end view of a spool distributor of the valve; and
Figure 6 is a sectioned side elevation of the spool taken on line 6-6 of Figure 5.

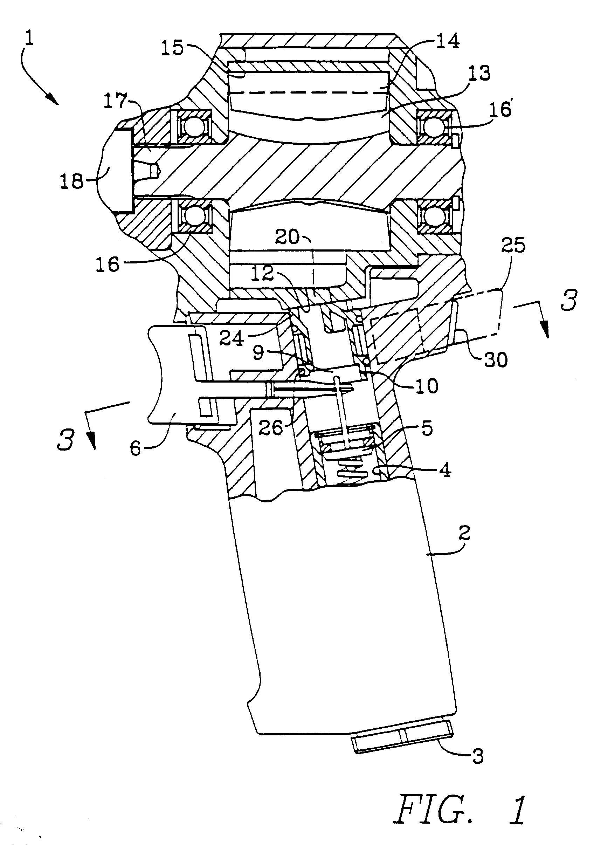

Referring to Figure 1, part of a power tool is shown in partial section. The power tool 1 is provided with a handle 2 having a pneumatic fluid or air inlet 3 for providing motive fluid to a pneumatically operated motor or air motor 13. Air is supplied to the air motor through an air inlet passageway 4. A tilt valve 5 is operated by means of a trigger 6 to admit pressure fluid to a chamber 9.

Disposed within the chamber 9 is a rotary reversing valve spool 10 performing as a reversing valve means for selectively distributing pressure fluid to a forward supply port 20 or optionally a reverse port 21 (shown hidden behind the forward port 20) at a position of approximately 180 degrees opposite the forward port 20, the ports 20 and 21 being in a planar plate 12 which is located at a circular end of the chamber 9.

The reversing valve spool 10 is provided with a planar segmented end which slidingly co-operates with one planar surface of the plate 12. The spool 10 contains forward and reverse ports or passages 22 and 23 and a notched area 29 which handles secondary exhaust, as will be described later in greater detail.

Air entering the forward or reverse ports 20 or 21 selectively proceeds to drive the air motor 13 in forward or reverse direction as the air is expanded against motor vanes 14 in the motor cylinder 15. The motor rotates on bearings 16 and 16' to drive an output shaft 17 which in turn drives a rotating shaft 18 of the working output device.

Returning now to the co-operating face between the reversing valve 10 and the plate 12, air passing the spool 10 from the air passage 4 in the chamber 9 is directed to the two face termination passages 22, 23. A partition 24, which forms a face seal of the rotary reversing valve, is semicircular and has the two passages 22 and 23, which are pie shaped, extending to the co-operating valve surface. The passages 22, 23 selectively register with either the forward port 20 or the reverse port 21 in the valve plate 12. The notched area 29 registers with the corresponding port 20 or 21 to bleed secondary exhaust which prevents recompression. The notched area 29 allows the secondary exhaust to enter a main exhaust cavity.

The co-operating ports of the spool and valve plate are located about the periphery of respective circles of the same diameter.

Since the passages 22 and 23 are orientated approximately 90 degrees with respect to one another and the forward and reversing ports 20, 21 are located approximately 180 degrees apart, it can be appreciated that rotating the reversing valve spool 10 approximately 90 degrees will bring one or the other passage 22, 23 in contact with one of the ports 20 or 21 leading to either the forward or reverse chambers of the motor.

Thus, rotating the reversing valve spool 10 will accomplish direction of motive fluid to drive the motor either forwards or in reverse.

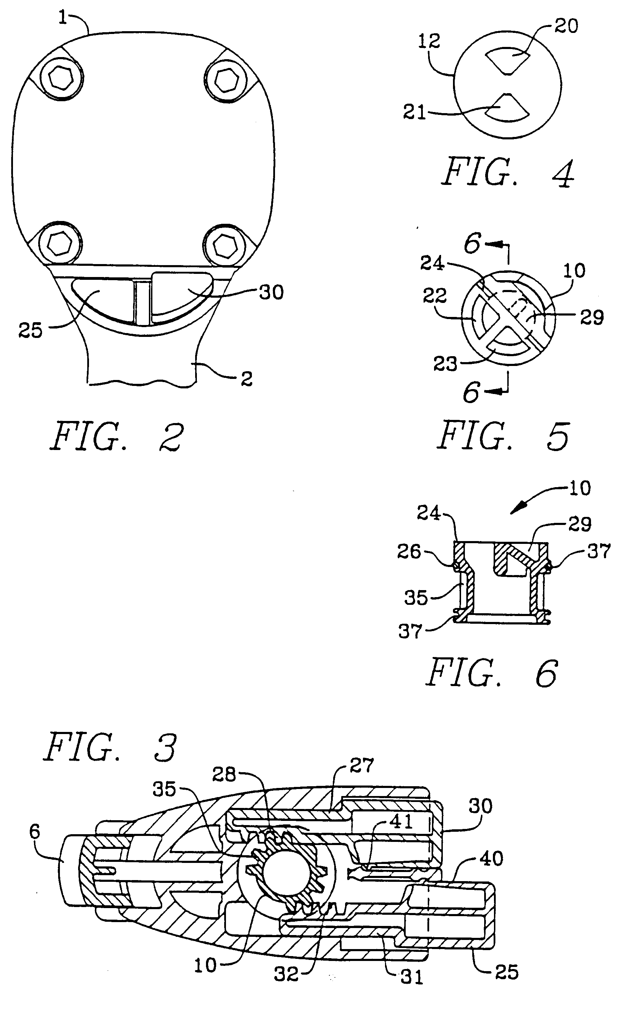

Referring now to Figure 3, the rotary spool 10 is formed with a plurality of pinion gear teeth about its approximate midsection. A forward push button 30 is shown provided with a rack portion 27 having rack teeth 28 which co-operate with pinion teeth 35 on the rotary reversing spool valve 10. Rotating the rotary spool valve in the counterclockwise direction by depressing the push button 30 aligns the passage 23 with the forward port 20. Conversely, depressing reverse push button 25 to move rack 31 to the left with reverse rack teeth 32 will rotate the reverse valve spool in the clockwise direction to align the passage 22 with the reverse port 21.

It should be understood that Figure 4 is an underneath view of the reversing valve plate 12 and Figure 5 is a plan view of the reversing valve 10.

Referring to Figure 6, the reversing valve spool 10 is provided with an "O" ring 26 in each of two "O" ring grooves 37 for the purposes of sealing the rack portion against intrusion of pressure fluid, thereby preventing leakage to the operating push buttons.

The length of the rack and pinion co-operating teeth and their spacing cooperate to limit the depression excursion of the push buttons and a flexible tab detent 40 and 41 on the reverse push button 25 and the forward push button 30 respectively provide a snap action retention feel to the depression of the push buttons. The detents also retain the selected rotary position of the reversing valve spool 10.

A particular feature of the present construction is the straight line flow of pressure fluid to the forward and reversing motive chamber, thus minimising pressure loss in a reversing valve circuit.

## Claims

1. A reverse valve for a pneumatic pressure operated power tool comprising a rotatable spool (10) disposed in a circular passageway (9); a means (28, 32) for engaging and rotating said spool; said spool being further provided with a means (4) for receiving air at one end thereof and selectively distributing it to one of a plurality of passages of the valve; said selected distribution being in response to selected rotation of said spool; characterised in that said passages facing the other end of said spool, through which end air is distributed, and in that said means for engaging and rotating said spool comprises a plurality of side-by-side positioned push buttons (25, 30).

2. A valve according to claim 1, wherein said means for engaging and rotating said spool comprises rack gear means (28, 32) on said push buttons for engaging a pinion gear means (35) on opposite sides of the periphery of said spool (10) for effecting rotation of said spool in response to button movement.

3. A valve according to claim 1 or 2, wherein said rotatable spool (10) is further provided with a face valving means including passages (22, 23) at said other end which co-operate with a valve plate (12) communicating with said passages.

4. A valve according to claim 3, wherein said face valving means and said valve plate (12) are further provided with cooperating ports (20, 21).

5. A valve according to claim 4, wherein the co-operating ports on said face valving means and said valve plate are spaced apart on the periphery of a circle of the same diameter on each of said face valving means and said valve plate.

6. A valve according to claim 5, wherein the co-operating ports on said face valving means and said valve plate are spaced apart at a different arcuate angle.

7. A valve according to claim 6, wherein the co-operating ports (22, 23) in said face valving means are spaced apart approximately 90 degrees and the co-operating ports (20, 21) on said valve plate are spaced apart approximately 180 degrees, whereby rotation of said spool (10) approximately 90 degrees will selectively align one or another of said passages (22, 23) to effect selected rotation of the tool.

8. A pneumatic pressure operated tool incorporating a push button reverse valve according to any one of the preceding claims.

## Patentansprüche

1. Rückwärtsventil für ein durch pneumatischen Druck betätigtes, kraftbetriebenes Werkzeug mit einer drehbaren Spule (10), die in einem kreisförmigen Durchgang (9) angeordnet ist, mit einer Einrichtung (28, 32) zum Angreifen an der und zum Verdrehen der Spule, wobei die Spule ferner mit einer Einrichtung (4) zur Aufnahme von Luft an einem ihrer Enden und zum wahlweisen Verteilen der Luft an einen einer Vielzahl von Durchgängen des Ventils versehen ist, wobei das wahlweise Verteilen in Abhängigkeit von einer gewählten Verdrehung der Spule erfolgt, **dadurch gekennzeichnet,** daß die Durchgänge dem anderen Ende der Spule gegenüberliegen, durch welches Ende die Luft verteilt wird, und daß die Einrichtung zum Angreifen an der und zum Verdrehen der Spule eine Vielzähl von Seite an Seite angeordneten Druckknöpfen (25, 30) aufweist.

2. Ventil nach Anspruch 1, bei dem die Einrichtung zum Angreifen an der und zum Verdrehen der Spule einen Zahntrieb (28, 32) an den Druckknöpfen zum Eingriff mit einem Ritzeltrieb (35) an gegenüberliegenden Seiten des Umfangs der Spule (10) aufweist, um eine Verdrehung der Spule in Abhängigkeit von der Bewegung der Druckknöpfe zu bewirken.

3. Ventil nach Anspruch 1 oder 2, bei der die drehbare Spule (10) ferner mit einer Ventileinrichtung an einer Stirnfläche versehen ist, die Durchgänge (22, 23) an dem anderen Ende aufweist, die mit einer Ventilplatte (12) zusammenwirken, die mit den Durchgängen in Verbindung steht.

4. Ventil nach Anspruch 3, bei dem die Ventileinrichtung an der Stirnfläche und die Ventilplatte (12) ferner mit zusammenwirkenden Öffnungen (20, 21) versehen sind.

5. Ventil nach Anspruch 4, bei dem die zusammenwirkenden Öffnungen an der Ventileinrichtung an der Stirnfläche und die Ventilplatte an dem Umfang eines Kreises voneinander beabstandet sind, der sowohl an der Ventileinrichtung an der Stirnfläche als auch an der Ventilplatte den gleichen Durchmesser hat.

6. Ventil nach Anspruch 5, bei dem die zusammenwirkenden Öffnungen an der Ventileinrichtung an der Stirnfläche und die Ventilplatte um einen unterschiedlichen Bogenwinkel voneinander beabstandet sind.

7. Ventil nach Anspruch 6, bei dem die zusammenwirkenden Öffnungen (22, 23) in der Ventileinrichtung an der Stirnfläche um etwa 90 Grad voneinander beabstandet sind und die damit zusammenwirkenden Öffnungen (20, 21) an der Ventilplatte um etwa 180 Grad voneinander beabstandet sind wodurch eine Verdrehung der Spule (10) um etwa 90 Grad wahlweise einen oder einen anderen der Durchgänge (22, 23) zur Fluchtung bringt, um eine ausgewählte Verdrehung der Spule zu bewirken.

8. Pneumatisches druckbetätigtes Werkzeug mit einem Druckknopfrückwärtsventil gemäß einem der vorhergehenden Ansprüche.

## Revendications

1. Valve d'inversion pour un outil de puissance entraîné par une pression pneumatique, comprenant un noyau rotatif (10) disposé dans un passage circulaire (9) ; des moyens (28, 32) pour engager et faire tourner ledit noyau ; ledit noyau étant en outre pourvu de moyens (4) pour recevoir de l'air à l'une de ses extrémités et pour le distribuer de façon sélective vers l'un des passages d'une pluralité de passages de la valve ; ladite distribution sélective ayant lieu en réponse à une rotation choisie dudit noyau ; caractérisé en ce que lesdits passages font face à l'autre extrémité dudit noyau à travers laquelle de l'air est distribué, et en ce que lesdits moyens pour engager et faire tourner ledit noyau comprennent une pluralité de boutons-poussoirs (25, 30) placés côte-à-côte.

2. Valve selon la revendication 1, dans laquelle lesdits moyens pour engager et faire tourner ledit noyau comprennent des moyens formant crémaillère (28, 32) sur lesdits boutons-poussoirs pour engager des moyens formant pignon (35) sur les côtés opposés de la périphérie dudit noyau (10) pour effectuer une rotation dudit noyau en réponse au mouvement des boutons.

3. Valve selon l'une ou l'autre des revendications 1 et 2, dans laquelle ledit noyau rotatif (10) est en outre pourvu de moyens formant valve à glace qui incluent des passages (22, 23) à ladite autre extrémité, qui coopèrent avec une plaque de valve (12) communiquant avec lesdits passages.

4. Valve selon la revendication 3, dans laquelle ladite valve à glace et ladite plaque de valve (12) sont en outre pourvues d'orifices coopérants (20, 21).

5. Valve selon la revendication 4, dans laquelle les orifices coopérants sur ladite valve à glace et sur ladite plaque de valve sont écartés les uns des autres sur la périphérie d'un cercle ayant le même diamètre sur ladite valve à glace et sur ladite plaque de valve.

6. Valve selon la revendication 5, dans laquelle les orifices coopérants sur ladite valve à glace et sur ladite plaque de valve sont écartés les uns des autres sous des angles d'arcs différents.

7. Valve selon la revendication 6, dans laquelle les orifices coopérants (22, 23) dans ladite valve à glace sont écartés les uns des autres approximativement de 90°, et les orifices coopérants (20, 21) sur ladite plaque de valve sont écartés les uns des autres approximativement de 180°, grâce à quoi la rotation dudit noyau (10) sur approximativement 90° va sélectivement aligner l'un ou l'autre desdits passages (22, 23) pour effectuer une rotation choisie du noyau.

8. Outil entraîné par une pression pneumatique qui incorpore une valve d'inversion à bouton-poussoir selon l'une quelconque des revendications précédentes.
